# DEMANDE DE BREVET EUROPEEN

(11) **EP 1 050 210 A1**
(43) Date de publication de la demande: **08.11.2000**
(21) Numéro de dépôt: 00401217.5
(22) Date de dépôt: 03.05.2000
(51) Int. Cl.: A01J 25/12

(54) **Dispositif de moulage d'un mélange de caillé et de sérum, installation de fabrication de fromages, procédé de moulage et procédé de fabrication de fromages correspondants**

(30) Priorité: 06.05.1999 FR 9905792
(71) Demandeur: FROMAGERIES BEL, 75008 Paris (FR)
(72) Inventeur: Couly, Gérard, 95390 Saint Prix (FR)
(74) Mandataire: Jacobson, Claude

(57) **Abrégé**

L'invention concerne un dispositif (5) de moulage d'un mélange de caillé et de sérum du type comprenant une enceinte (16) de réception dudit mélange munie d'au moins un tube (18) de déversement du mélange vers un moule (6). Le dispositif de moulage (5) comprend en outre, pour ledit ou chaque tube de déversement (18), un piston (20) de dosage du mélange déversé mobile entre une position abaissée et une position relevée. Ledit ou chaque piston de dosage (20) comprend au moins un siège (29), traversé par au moins un passage de déversement (31) du mélange, et au moins un obturateur (34) mobile entre une position de libération et une position d'obturation du ou desdits passage(s) de déversement du mélange.

Application notamment à la fabrication de fromages à pâte molle.

## Description

La présente invention concerne un dispositif de moulage d'un mélange de caillé et de sérum du type comprenant une enceinte de réception dudit mélange munie d'au moins un tube de déversement du mélange contenu dans l'enceinte vers un moule, le dispositif comprenant en outre, pour ledit ou chaque tube d'évacuation, un piston de dosage du mélange déversé mobile entre une position abaissée et une position relevée.

L'invention s'applique, par exemple, à la fabrication de fromages à pâte molle et à pâte pressée.

Pour fabriquer de tels fromages, on produit, par coagulation de lait, un mélange de caillé et de sérum, puis on vient déposer le caillé dans des moules dont la forme correspond à la forme des fromages à obtenir.

Divers procédés existent pour venir déposer le caillé dans chaque moule.

On connaît par exemple des procédés dans lesquels on élimine la majeure partie du sérum pour former un pain de caillé que l'on découpe manuellement en portions. On vient ensuite placer manuellement ces portions dans les moules. De tels procédés sont particulièrement longs et coûteux et posent des problèmes d'hygiène en raison des manipulations manuelles effectuées sur le caillé.

On connaît également du document FR-B-2 642 612 un procédé de moulage utilisant un dispositif du type précité.

Dans ce procédé, on soutire du sérum en amont de l'enceinte de réception du mélange. Pour chaque tube de déversement, un système de deux pistons espacés permet d'isoler une portion de caillé dans le tube. Le piston inférieur est incliné par rapport à l'horizontale pour évacuer ladite portion par une ouverture latérale ménagée dans le tube de déversement, depuis laquelle la portion chute dans un moule.

Ce procédé n'est pas satisfaisant car, d'une part, la chute des portions de caillé dans les moules entraîne la production de miettes de caillé ou « fines », et, d'autre part, le passage des portions de caillé hors du tube pour chuter dans les moules peut poser des problèmes d'hygiène.

L'invention a pour but de résoudre ces problèmes en fournissant un dispositif de moulage du type précité permettant de mouler un mélange de caillé et de sérum dans des conditions d'hygiène améliorées et en limitant la production de « fines ».

A cet effet, l'invention a pour objet un dispositif de moulage d'un mélange de caillé et de sérum du type précité, caractérisé en ce que ledit ou chaque piston comprend un siège, traversé par au moins un passage de déversement du mélange, et au moins un obturateur mobile entre une position de libération et une position d'obturation du ou desdits passage(s) de déversement du mélange.

Selon des modes particuliers de réalisation, le dispositif de moulage peut comprendre l'une ou plusieurs des caractéristiques suivantes, prises isolément ou selon toutes les combinaisons techniquement possibles :
- pour ledit ou chaque piston de dosage, ledit ou chaque obturateur est mobile en rotation par rapport au siège ;
- pour ledit ou chaque piston de dosage, le siège et ledit ou lesdits obturateur(s) comprennent des secteurs de disques superposés ;
- pour ledit ou chaque piston de dosage, le siège d'une part et ledit ou lesdits obturateur(s) d'autre part comprennent un même nombre de secteurs de disques régulièrement espacés angulairement ;
- pour ledit ou chaque piston de dosage, ledit ou chaque obturateur est mobile en translation par rapport au siège ;
- ledit ou chaque obturateur, en position d'obturation du ou des passage(s) de déversement du mélange correspondants, prend appui sur le siège correspondant le long d'une surface inclinée par rapport à la direction de translation dudit obturateur par rapport au siège ;
- le dispositif de moulage comprend, pour ledit ou chaque tube de déversement, des moyens d'introduction dans ledit tube d'un additif au mélange de caillé et de sérum ;
- pour ledit ou chaque tube de déversement, lesdits moyens d'introduction comprennent une source dudit additif sous forme fluide raccordée audit tube de déversement .
- pour ledit ou chaque tube de déversement, lesdits moyens d'introduction comprennent un distributeur d'additif sous forme solide ou pâteuse comportant un logement de réception d'un additif, ledit distributeur étant mobile par rapport audit tube de déversement entre une position où le logement est situé à l'extérieur du tube pour introduire un additif dans le logement, et une position où le logement est situé dans le tube pour y libérer un additif.

L'invention a en outre pour objet une installation de fabrication de fromages comprenant des moyens de production d'un mélange de caillé et de sérum et un dispositif de moulage dudit mélange dans des moules, le dispositif de moulage étant raccordé auxdits moyens de production du mélange, caractérisée en ce que le dispositif de moulage est un dispositif tel que défini ci-dessus.

Selon des modes particuliers de réalisation, l'installation peut comprendre l'une ou plusieurs des caractéristiques suivantes, prises isolément ou selon toutes les combinaisons techniquement possibles :
- l'installation comprend en outre, en aval du dispositif de moulage, un dispositif d'ajustement de la quantité de caillé déversée dans chaque moule ;
- le dispositif d'ajustement de la quantité de caillé déversée comprend des moyens de pesage d'au moins un moule, des moyens de dépôt de caillé provenant dudit mélange de caillé et de sérum dans ledit moule, et des moyens de commande des moyens de dépôt en fonction de la masse dudit moule déterminée par les moyens de pesage ;
- le dispositif d'ajustement de la quantité de caillé déversée comprend une enceinte de réception du mélange de caillé et de sérum raccordée aux moyens de production dudit mélange, et les moyens de dépôt comprennent au moins un tube de distribution de caillé raccordé à ladite enceinte ;
- ledit ou chaque tube de distribution de caillé est muni de passages d'évacuation du sérum, et les moyens de dépôt comprennent, pour ce tube de distribution, un organe de séparation de morceaux d'un bloc de caillé formé dans ledit tube de distribution ;
- le nombre et la disposition relative des moyens de dépôt du dispositif d'ajustement de la quantité de caillé déversée et du ou des tube(s) de déversement du dispositif de moulage sont identiques ;
- l'installation comprend, entre le dispositif de moulage et le dispositif d'ajustement de la quantité de caillé déversée, une station d'égouttage du mélange de caillé et de sérum déversé dans chaque moule.

L'invention a également pour objet un procédé de moulage d'un mélange de caillé et de sérum dans des moules au moyen d'un dispositif de moulage tel que défini ci-dessus, caractérisé en ce que, pour ledit ou chaque tube de déversement, on insère le tube de déversement dans un moule, on descend le piston de dosage dans le tube de déversement à proximité du fond du moule, le ou les obturateur(s) étant en position d'obturation du ou des passage(s) de déversement, on amène le ou les obturateur(s) en position de libération du ou des passage(s) de déversement, on remonte le piston de dosage en déversant ledit mélange directement dans le moule, on amène le ou les obturateur(s) en position d'obturation du ou des passage(s) de déversement, et on retire le tube de déversement du moule ainsi rempli.

Selon des modes particuliers de réalisation :
- le dispositif de moulage comprenant, pour ledit ou chaque tube de déversement, des moyens d'introduction dans ledit tube d'un additif audit mélange de caillé et de sérum, on déverse, une première quantité de mélange directement dans ledit moule en remontant le piston de dosage, puis on introduit ledit additif dans le tube de déversement sous le piston de dosage avant de déverser une deuxième quantité de mélange directement dans ledit moule en remontant le piston de dosage ;
- pour ledit ou chaque tube de déversement, lesdits moyens d'introduction d'un additif audit mélange comprenant un distributeur d'additif sous forme solide ou pâteuse comportant un logement de réception d'un additif, ledit distributeur étant mobile par rapport au tube de déversement entre une position où le logement, est situé à l'extérieur du tube de déversement pour introduire un additif dans le logement et une position où le logement est situé dans le tube pour y libérer un additif, on déverse une première quantité de mélange directement dans ledit moule en remontant le piston de dosage, on amène le ou les obturateur(s) en position d'obturation du ou des passage(s) de déversement lorsque le piston de dosage est à un niveau inférieur à celui du distributeur d'additif en position de libération d'un additif, on remonte le piston de dosage à un niveau supérieur à celui du distributeur d'additif en position de libération d'un additif, on amène le distributeur d'additif en position de libération d'un additif, un additif sous forme solide ou pâteuse ayant préalablement été introduit à l'intérieur du logement du distributeur d'additif, on libère ledit additif dans le tube, on ramène le distributeur d'additif vers sa position d'introduction d'un additif à l'intérieur de son logement, on descend le piston de dosage dans le tube de déversement au voisinage d'une surface supérieure dudit additif libéré dans le tube, on amène le ou les obturateur(s) en position de libération du ou des passage(s) de déversement, et on remonte le piston en déversant une deuxième quantité dudit mélange directement dans le moule.

L'invention a en outre pour objet un procédé de fabrication de fromages à partir d'une installation tel que définie ci-dessus, caractérisé en ce qu'on moule le mélange de caillé et de sérum dans des moules suivant un procédé tel que défini ci-dessus.

Selon des modes particuliers de réalisation :
- l'installation comprenant en outre, en aval du dispositif de moulage un dispositif d'ajustement de la quantité de caillé déversée dans ledit ou chaque moule, le dispositif d'ajustement comportant lui-même des moyens de pesage d'au moins un moule, des moyens de dépôt de caillé provenant dudit mélange dans ledit moule, et des moyens de commande des moyens de dépôt, on commande pour chaque moule les moyens de dépôt en fonction de la masse dudit moule déterminée par les moyens de pesage ;
- pour chaque moule, on laisse le mélange déversé dans ledit moule s'égoutter avant d'ajuster la quantité de caillé déversée dans ce moule.

L'invention sera mieux comprise à la lecture de la description qui va suivre, donnée uniquement à titre d'exemple, et faite en se référant aux dessins annexés sur lesquels :
- la figure 1 est une vue schématique latérale, partiellement en coupe, d'une installation de fabrication de fromages selon l'invention,
- la figure 2 est une demi-vue schématique en coupe transversale et agrandie du dispositif de moulage de l'installation de la figure 1,
- les figures 3 et 4 sont des vues schématiques agrandies de dessus, illustrant un piston de dosage du dispositif de la figure 2 dans deux positions distinctes,
- les figures 5 à 7 sont des vues schématiques partielles d'un tube de déversement du dispositif de la figure 2, illustrant respectivement différentes phases de fonctionnement du dispositif de moulage,
- la figure 8 est une vue partielle, schématique, agrandie et en coupe diamétrale, d'un piston de dosage suivant une variante de l'invention, et
- les figures 9 à 11 sont des vues latérales en coupe, schématiques et agrandies, illustrant le fonctionnement d'une variante du dispositif de moulage de la figure 2.

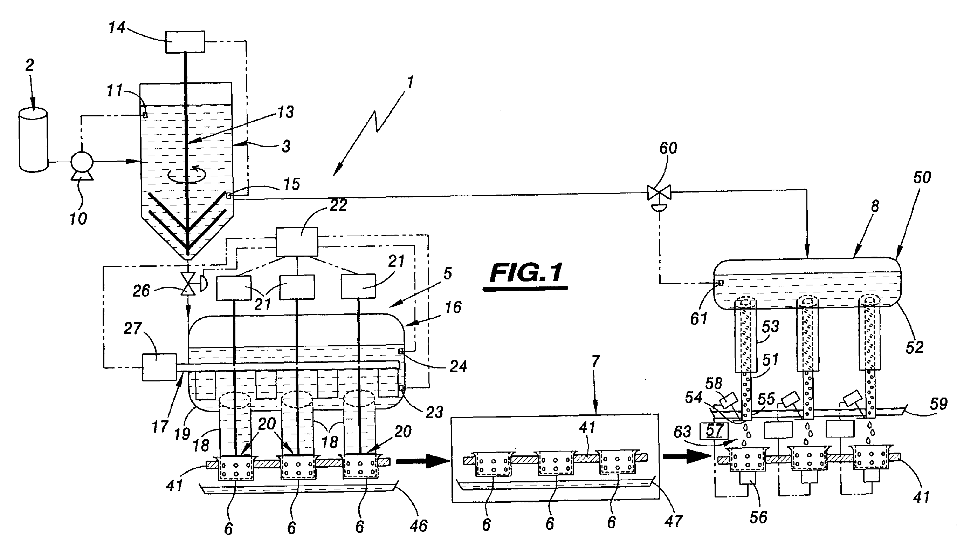

La figure 1 illustre schématiquement une installation 1 de fabrication de fromages qui comprend essentiellement :
- une cuve 2 de coagulation de lait pour produire un mélange de caillé et de sérum,
- une cuve tampon 3 de stockage du mélange de caillé et de sérum et éventuellement de régulation de la concentration dudit mélange provenant de la cuve 2,
- un dispositif 5 de moulage du mélange provenant de la cuve tampon 3 dans des moules 6,
- une station 7 d'égouttage du mélange contenu dans les moules 6 issus du dispositif 5 de moulage, et
- un dispositif 8 d'ajustement de la quantité de caillé dans chaque moule 6 après égouttage dans la station 7.

La cuve tampon 3 est raccordée à la cuve de coagulation 2 par l'intermédiaire d'une pompe 10 à laquelle est raccordé électriquement un capteur 11 de mesure du niveau du mélange de caillé et de sérum contenu dans la cuve tampon 3.

La cuve 3 est munie d'un agitateur 13 à pâles, d'axe vertical, dont un moteur d'entraînement 14 est raccordé électriquement à un capteur 15 de mesure de la teneur en sérum du mélange contenu dans le fond de la cuve tampon 3.

Le dispositif de moulage 5 comprend essentiellement :
- une enceinte 16 de réception du mélange de caillé et de sérum issu de la cuve tampon 3, cette enceinte 16 étant munie d'un agitateur 17 à pâles, d'axe horizontal, et de six tubes 18 de déversement du mélange qui débouchent par leurs extrémités supérieures dans le fond 19 de l'enceinte 16,
- six pistons de dosage 20 disposés chacun dans un tube de déversement 18,
- des moyens 21 d'actionnement de chaque piston de dosage 20,
- une unité électronique de pilotage 22,
- un capteur 23 de mesure de la teneur en sérum du mélange de caillé et de sérum contenu dans le fond 19 de l'enceinte 16, et
- un capteur 24 de mesure du niveau du mélange de caillé et de sérum contenu dans l'enceinte 16.

L'enceinte 16 est raccordée à la cuve tampon 3 par l'intermédiaire d'une vanne 26.

Cette vanne 26, ainsi que les moyens 21 d'actionnement, le capteur de teneur 23, le capteur de niveau 24, et un moteur 27 d'entraînement de l'agitateur 17 sont raccordés électriquement à l'unité de pilotage 22.

Cette unité de pilotage 22 comprend un microprocesseur convenablement programmé pour assurer le fonctionnement de la vanne 26, des moyens 21 d'actionnement, et du moteur 27 tel que cela sera décrit ultérieurement.

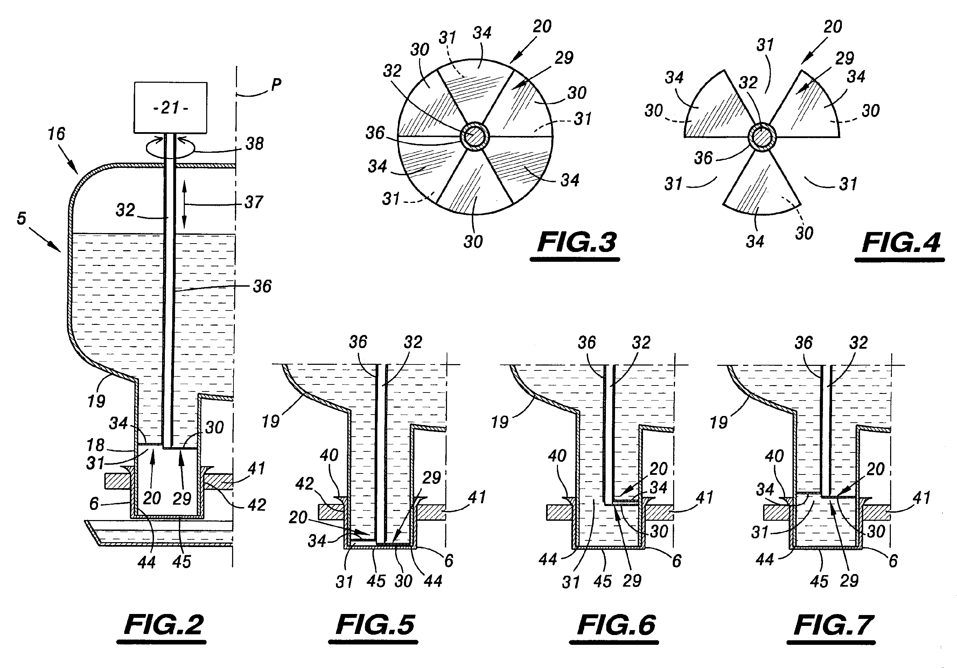

L'enceinte 16 est sensiblement symétrique par rapport à un plan médian longitudinal vertical P, dont la trace est visible sur la figure 2.

Les tubes de déversement 18 sont identiques, de section circulaire, à paroi fine, et s'étendent verticalement vers le bas depuis le fond 19 de l'enceinte 16, ce fond 19 étant de profil transversal courbe.

Les tubes de déversement 18 sont disposés en deux rangées parallèles de trois tubes, symétriques l'une de l'autre par rapport au plan P.

Comme illustré plus particulièrement par les figures 2 à 4, chaque piston 20 comprend un siège 29 formé par trois secteurs de disques 30 identiques, d'étendue angulaire d'environ 60°, et qui sont espacés l'un de l'autre de 60°. Ainsi, ces secteurs de disques 30 délimitent entre eux des passages 31 en forme de secteurs de disques. Les secteurs 30 sont reliés chacun au niveau de leur partie la plus étroite à une tige verticale 32 qui s'étend vers le haut, dans le tube 18 correspondant et le reste de l'enceinte 16.

Chaque piston 20 comprend également trois obturateurs 34 identiques qui sont des secteurs de disques d'étendue angulaire légèrement supérieure à celle des secteurs de disques 31. Les obturateurs 34 sont espacés angulairement régulièrement l'un de l'autre et sont reliés chacun, au niveau de leur partie la plus étroite, à un tube 36 qui s'étend verticalement vers le haut dans le tube 18 correspondant et le reste de l'enceinte.

Pour chaque piston 20, la tige 32 est reçue dans le tube 36 et les obturateurs 34 sont disposés juste au-dessus du siège 29. Toutefois, sur les figures, les obturateurs 34 et le siège 29 sont représentés espacés verticalement pour plus de commodité. Les extrémités supérieures de la tige 32 du tube 36 font saillie vers le haut hors de l'enceinte 16 et sont reliées aux moyens 21 d'actionnement du piston 20 considéré.

Ces moyens 21 d'actionnement permettent de translater verticalement, comme illustré par la double flèche 37 de la figure 2, la tige 32 et le tube 36, et donc le piston 20 entre une position abaissée (figure 5) et une position relevée (figure 2).

Ces moyens 21 permettent également de faire pivoter, comme illustré par la double flèche 38 de la figure 2, le tube 36 autour de la tige 32, et donc les trois obturateurs 34 par rapport au siège 29, entre une position d'obturation des passages 31 (figures 2 et 3) et une position de libération des passages 31 (figures 4 et 6).

En position d'obturation des passages 31, le tube 18 est totalement obturé par le piston 20. Les obturateurs 34 recouvrent alors légèrement les bords des secteurs 31 adjacents en assurant ainsi une étanchéité par contact métal sur métal.

En position de libération des passages 31, les obturateurs 34 recouvrent les secteurs de disque 30 du siège 29 en libérant pratiquement complètement les passages 31.

Les moules 6 sont identiques et de forme cylindrique à base circulaire de diamètre intérieur légèrement supérieur au diamètre extérieur des tubes 18. Les moules 6 sont perforés, munis chacun d'un rebord supérieur 40, et maintenus par groupes de six par des cadres de support 41.

Chaque cadre 41 présente six logements circulaires 42 disposés en deux rangées de trois logements 42 d'une manière correspondant à la disposition relative des tubes de déversement 18. Chacun de ces logements 42 reçoit à faible jeu un moule 6 qui prend appui sur la surface supérieure du cadre de support 41 par l'intermédiaire de son rebord supérieur 40.

Pour assurer le moulage dans les six moules 6 supportés par un cadre de support 41, les extrémités inférieures ouvertes 44 des tubes 18 sont insérées chacune dans un de ces moules 6. Les extrémités inférieures 44 sont chacune pratiquement en contact avec le fond 45 du moule 6 correspondant.

Comme illustré par les figures 1 et 2, un bac 46 de récupération de sérum est en outre disposé sous les extrémités ouvertes 44 des tubes de déversement 18, et sous les moules 6 dans lesquels ces extrémités 44 sont engagées.

De manière analogue, la station 7 d'égouttage comprend un bac 47 de récupération de sérum disposé sous un groupe de six moules 6, maintenu par un cadre de support 41, et provenant du dispositif de moulage 5.

Le dispositif 8 d'ajustement de la quantité de caillé contenue dans les moules 6 comprend une enceinte 50 de réception du mélange de caillé et de sérum, munie de six tubes 51 de distribution et d'égouttage de caillé qui s'étendent vers le bas depuis le fond 52 de l'enceinte 50 avec une disposition relative analogue à celle des tubes de déversement 18 du dispositif 5 de moulage. Pour plus de visibilité, les références ne sont portées sur la figure 1 que pour un tube 51 et pour les équipements associés.

Chaque tube 51 est d'une part muni d'orifices d'évacuation du sérum, et d'autre part entouré uniquement dans sa partie supérieure par un manchon 53 de contrepression, qui est porté par le fond 52 de l'enceinte 50 et qui est fermé à son extrémité inférieure.

Un disque couteau 54 est disposé au niveau de l'extrémité inférieure 55 de chaque tube 51.

Un capteur pondéral 56 est disposé sous l'extrémité inférieure 55 de chaque tube 51. Chaque capteur pondéral 56 est raccordé à une unité électronique 57 de commande d'un moteur 58 d'entraînement du disque couteau 54 associé.

Un bac 59 de récupération de sérum est disposé transversalement aux tubes 51 légèrement au-dessus de leurs extrémités inférieures 55.

L'enceinte 50 du dispositif 8 d'ajustement de la quantité de caillé est par ailleurs raccordée à la cuve tampon 3 par l'intermédiaire d'une vanne 60 à laquelle est raccordé électriquement un capteur 61 de mesure du niveau du mélange de caillé et de sérum contenu dans l'enceinte 50.

Le fonctionnement d'installation 1 va être décrit ci-dessous.

La pompe 10 et le capteur de niveau 11 permettent de réguler le niveau de mélange de caillé et de sérum contenu dans la cuve tampon 3. L'agitateur 13 est piloté en fonction de signaux reçus du capteur de teneur 15 pour assurer l'homogénéité du mélange contenu dans cette cuve tampon 3.

De manière analogue, l'unité de pilotage 22 commande l'ouverture de la vanne 26 pour réguler le niveau de mélange contenu dans l'enceinte 16 du dispositif de moulage 5 en fonction de signaux reçus du capteur de niveau 24. L'unité de pilotage 22 commande également le fonctionnement de l'agitateur 17 à pâles pour assurer, par un mouvement rotatif alternatif, l'homogénéité du mélange contenu dans l'enceinte 16. Par ailleurs, les pistons 20 du dispositif de moulage 5 étant en position relevée et les obturateurs 34 en position d'obturation, le mélange de caillé et de sérum est retenu dans l'enceinte 16 et dans les tubes 18 au-dessus des pistons 20.

La vanne 60 est quant à elle pilotée en fonction de signaux reçus du capteur de niveau 61 pour réguler le niveau du mélange de caillé et de sérum contenu dans l'enceinte 50 du dispositif 8. Le mélange contenu dans l'enceinte 50 passe dans les tubes 51 de déversement et d'égouttage. Le sérum est alors évacué par les orifices de ces tubes 51 de manière à former un bloc de caillé au niveau de l'extrémité inférieure de chaque tube 51. Ces blocs sont retenus dans les tubes 51 par les disques couteau 54. La présence des manchons de contre-pression 53, qui retiennent le sérum évacué par les orifices supérieurs des tubes 51, permet d'éviter l'obturation des extrémités supérieures des tubes 51 par un bloc de caillé qui pourrait s'y former en leur absence (colmatage).

Les tubes de déversement 18 du dispositif de moulage 5 étant engagés dans un groupe de six moules 6 comme indiqué précédemment, l'unité de pilotage 22 pilote les déplacements de ces pistons 20 comme cela va maintenant être décrit pour effectuer un cycle de moulage.

Les pistons 20 sont tout d'abord abaissés jusqu'à ce qu'ils soient disposés sensiblement au voisinage des fonds 45 des moules 6, comme illustré par la figure 5.

Les obturateurs 34 sont alors amenés en position de libération des passages 31, les pistons 20 n'obturant plus totalement les tubes de déversement 18. Ensuite, les pistons 20 sont remontés progressivement, de sorte que le mélange de caillé et de sérum de l'enceinte 16 est déversé progressivement et délicatement directement dans les moules 6 sans que ce mélange ne subisse de chute.

Au cours du déversement du mélange de sérum et de caillé dans les moules 6, le sérum contenu dans celui-ci est évacué par les perforations des moules 6 vers le bac 46 de réception de sérum.

Après une course prédéterminée fonction de la hauteur des moules 6 à remplir, les obturateurs 34 sont amenés dans leur position d'obturation des passages 31 si bien que le déversement du mélange de caillé et de sérum dans les moules 6 est arrêté.

Le groupe de six moules 6 ainsi remplis est ensuite dégagé des extrémités inférieures 44 des tubes de déversement 18, le cadre de support 41 facilitant la manipulation de ce groupe de moules 6.

Ensuite, on vient placer le groupe de moules 6 issus du dispositif 5 de moulage dans la station 7 d'égouttage au-dessus du bac 47 de réception de sérum. On laisse alors le sérum s'évacuer par les perforations des moules 6 vers le bac 47 pendant un temps d'égouttage relativement court, de préférence compris entre 1 et 10 minutes. Environ 40 à 50% en masse du sérum contenu dans les moules 6 ont alors été évacués.

Ensuite, on vient placer le groupe de six moules 6 sous les extrémités inférieures 55 des tubes 51 de déversement et d'égouttage du dispositif 8, le cadre 41 permettant de disposer simultanément les six moules 6 en regard chacun d'une extrémité 55 d'un tube 51.

Les moules 6 reposent chacun sur un capteur pondéral 56, les bords supérieurs 40 des moules 6 ne prenant plus appui sur le cadre de support 41.

Pour chaque moule 6, le capteur pondéral 56 correspondant mesure la masse du moule 6. L'unité de commande 57, dans laquelle le fromager a mémorisé une masse prédéterminée suivant le fromage à fabriquer, commande alors le remplissage du moule de la masse manquante. Ainsi, l'unité de commande 57 commande le moteur 58 correspondant pour que le disque couteau 54 découpe des morceaux de caillé 63 appelés « copeaux » de 0,5 g environ et de forme d'un tiers du tronc de cylindre correspondant à la section du bloc de caillé contenu dans le tube 51. Lorsque le poids fixé prédéterminé est atteint, l'unité de commande 57 arrête le moteur 58 et le disque couteau 54 qui en position statique, retient le pain de caillé contenu dans le tube 51. A ce moment l'ensemble est prêt à recommencer un nouveau cycle.

Le procédé mis en oeuvre par l'installation 1, totalement automatisé, permet de doser du caillé dans les moules 6 en limitant la production de « fines » et les problèmes d'hygiène. En effet, le dispositif de moulage 5 permet de mouler le mélange de caillé et de sérum directement dans les moules 6 en évitant la chute du caillé et en réduisant les interactions du mélange avec l'environnement extérieur. Par ailleurs, la quantité de « fines » produites lors de l'étape d'ajustement de la quantité de caillé contenue dans les moules 6 est relativement faible.

On notera que la finesse des parois des tubes de déversement 18 permet de remplir les moules 6 de manière satisfaisante.

De plus, les écarts types entre les quantités de caillé contenues dans chaque moule 6 en aval du dispositif 8 sont relativement faibles.

On constate également que, du fait du procédé mis en oeuvre par le dispositif 5 de moulage, les fromages obtenus présentent une texture et un goût particuliers les distinguant assez fortement des fromages obtenus par les procédés classiques.

Enfin, le procédé de fabrication de fromages décrit permet de fabriquer aussi bien des fromages à pâte molle que des fromages à pâte pressée.

Dans une variante non représentée, l'installation 1 ne comprend pas de dispositif séparé d'ajustement de la quantité de caillé déversée dans les moules.

Dans ce cas, on peut par exemple procéder à un premier moulage principal dans les moules 6 comme décrit précédemment, puis, après un temps d'égouttage on redescend légèrement les pistons 20 pour venir assurer un deuxième moulage additionnel pour compléter la quantité de caillé contenue dans chaque moule 6.

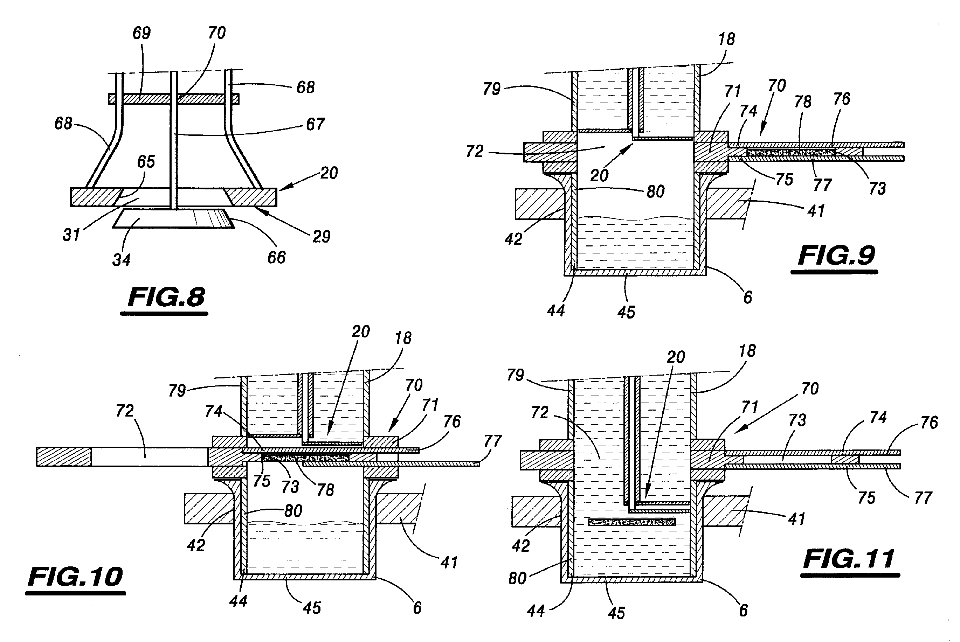

La figure 8 illustre une variante de réalisation des pistons 20 selon laquelle chaque piston 20 comprend un siège 29 en forme de disque dans lequel un passage central 31 a été ménagé. Ce passage central 31 est délimité par une paroi tronconique 65 convergeant vers le haut.

Chaque piston 20 comprend un obturateur central 34 de forme correspondant à celle du passage 31. Ainsi chaque obturateur 34 a la forme d'un disque dont la tranche 66 est tronconique et converge vers le haut. Une tige centrale 67 de manoeuvre s'étendant vers le haut depuis l'obturateur 34 remplace le tube 36 des figures 1 à 7, tandis que trois tiges périphériques 68, dont deux sont visibles sur la figure 8, s'étendant verticalement vers le haut depuis le siège 29, remplacent la tige 32 des figures 1 à 7.

Pour chaque piston 20, les tiges 68 sont espacées angulairement d'environ 120° l'une de l'autre et sont reliées entre elles par une plaque 69 munie d'un orifice central 70 dans lequel la tige 67 peut coulisser.

Chaque obturateur 34 est mobile en translation verticale par rapport au siège 29 correspondant entre une position d'obturation et une position de libération du passage 31 correspondant. En position d'obturation, la surface 66 d'un obturateur 34 est appliquée contre la surface 65 du siège 29 correspondant. En raison des formes convergentes des surfaces 65 et 66, une bonne étanchéité est obtenue entre l'obturateur 34 et le siège 29.

Dans sa position de libération, chaque obturateur 34 est abaissé par rapport au siège 29 correspondant en dégageant le passage 31.

Les figures 9 à 11 illustrent une variante du dispositif 5 de moulage de la figure 1, selon laquelle chaque tube 18 est équipé d'un ensemble 70 d'insertion d'additifs sous forme solide ou pâteuse dans le mélange de caillé et de sérum déversé dans chaque moule 6.

Les ensembles 70 étant identiques, un seul sera décrit en regard des figures 9 à 11.

Comme illustré par ces figures, l'ensemble 70 comprend un corps 71 qui s'étend transversalement au tube 18 et qui est percé de deux alésages 72 et 73 d'axes parallèles à l'axe du tube 18.

Le corps 71 est situé à un niveau intermédiaire entre ceux du piston 20 en position relevée (figures 9 et 10) et en position abaissée. Le corps 71 délimite le tube de déversement 18 en un tronçon supérieur 79 et un tronçon inférieur 80.

L'alésage 72 est de diamètre correspondant au diamètre intérieur du tube 18.

L'alésage ou logement 73 a été ménagé à côté de l'alésage 72 et deux dégagements latéraux 74 et 75 ont été ménagés respectivement dans la face supérieure et dans la face inférieure du corps 71, depuis un bord latéral du corps 71 vers l'intérieur de celui-ci. L'alésage 73 débouche dans ces deux dégagements 74 et 75.

Deux plaques 76 et 77, respectivement supérieure et inférieure, sont insérées chacune dans un des dégagements 74 et 75. Ces dégagements 74 et 75 forment glissières, chacune des plaques 76 et 77 pouvant coulisser, par rapport au corps 71, transversalement au tube 18, entre une position où elle obture une extrémité de l'alésage 73 et une position où elle libère cette même extrémité.

Le corps 71 peut en outre coulisser transversalement au tube 18 entre une position de chargement de l'alésage ou logement 73 par un additif solide ou pâteux 78 (figures 9 et 11) et une position de libération de cet additif 78 dans le tube de déversement 18 (figure 10).

Dans la position de chargement, l'alésage 72 du corps 71 est aligné avec les tronçons supérieur 79 et inférieur 80 du tube de déversement 18, les plaques 76 et 77 et l'alésage 73 étant situées à l'extérieur du tube de déversement 18.

Dans la position de libération de l'additif 78, l'alésage 73 est situé entre les tronçons supérieur 79 et inférieur 80 du tube de déversement 18, des extrémités (à droite sur la figure 10) des plaques 76 et 77 étant accessibles depuis l'extérieur du tube 18.

L'utilisation de cet ensemble 70 d'insertion d'un additif est la suivante.

Le corps 71 étant en position de chargement d'un additif, après déversement d'une première quantité de mélange de caillé et de sérum dans le moule 6, les passages 31 sont obturés et le piston 20 est remonté au-dessus du corps 71 comme représenté sur la figure 9. On notera que l'alésage 72 guide momentanément le piston 20 lors de sa descente et de sa montée.

Par coulissement de la plaque supérieure 76, l'alésage ou logement 73 est rendu accessible et on vient placer un additif 78 dans ce logement 73. On ramène alors la plaque 76 dans sa position d'obturation du logement 73 puis on amène le corps 71 dans sa position de libération de l'additif 78 dans le tube de déversement 18, comme représenté sur la figure 10.

Ensuite, on amène la plaque inférieure 77 dans sa position de libération de l'extrémité inférieure du logement 73.

L'additif 78 est alors libéré et tombe sur le mélange de caillé et de sérum contenu dans le moule 6.

On ramène alors la plaque inférieure 77 dans sa position d'obturation de l'extrémité inférieure du logement 73 puis le corps 71 dans sa position de chargement d'un autre additif 78.

Le piston 20 est alors redescendu, en passant à nouveau au travers de l'alésage 72, légèrement au-dessus de l'additif 78 déposé dans le moule 6 puis le déversement du mélange de caillé et de sérum est poursuivi comme décrit précédemment en regard des figures 1 à 7.

Un tel ensemble 70 permet donc d'insérer des additifs solides ou pâteux au sein des fromages produits.

De tels additifs peuvent être par exemple des noix.

Dans d'autres variantes non représentées, les ensembles 70 d'insertion d'un additif peuvent comprendre chacun une source d'un additif sous forme fluide raccordée à une buse d'injection qui débouche dans le tube 18 légèrement au-dessus du bord supérieur 40 d'un moule 6 à remplir, à un niveau compris entre ceux des positions abaissée et relevée du piston 20.

De tels ensembles 70 d'insertion d'additif permettent de créer des fromages originaux en goût et en texture.

Le fonctionnement de ces ensembles 70 d'insertion d'additif peut être totalement automatisé.

## Revendications

1. Dispositif (5) de moulage d'un mélange de caillé et de sérum du type comprenant une enceinte (16) de réception dudit mélange munie d'au moins un tube (18) de déversement du mélange vers un moule (6), le dispositif comprenant en outre, pour ledit ou chaque tube de déversement, un piston (20) de dosage du mélange déversé mobile entre une position abaissée et une position relevée, caractérisé en ce que ledit ou chaque piston comprend un siège (29), traversé par au moins un passage (31) de déversement du mélange, et au moins un obturateur (34) mobile entre une position de libération et une position d'obturation du ou desdits passage(s) de déversement du mélange.

2. Dispositif selon la revendication 1, caractérisé en ce que, pour ledit ou chaque piston de dosage (20), ledit ou chaque obturateur (34) est mobile en rotation par rapport au siège (29).

3. Dispositif selon la revendication 2, caractérisé en ce que, pour ledit ou chaque piston de dosage (20), le siège (29) et ledit ou lesdits obturateur(s) (34) comprennent des secteurs de disques (30, 34) superposés.

4. Dispositif selon la revendication 3, caractérisé en ce que, pour ledit ou chaque piston de dosage (20), le siège d'une part et ledit ou lesdits obturateurs) d'autre part comprennent un même nombre de secteurs de disques (30, 34) régulièrement espacés angulairement.

5. Dispositif selon la revendication 1, caractérisé en ce que, pour ledit ou chaque piston de dosage (20), ledit ou chaque obturateur (34) est mobile en translation par rapport au siège (29).

6. Dispositif selon la revendication 5, caractérisé en ce que ledit ou chaque obturateur (34), en position d'obturation du ou des passage(s) (31) de déversement du mélange correspondants, prend appui sur le siège correspondant le long d'une surface inclinée (65) par rapport à la direction de translation dudit obturateur par rapport au siège.

7. Dispositif selon l'une quelconque des revendications 1 à 6, caractérisé en ce qu'il comprend, pour ledit ou chaque tube de déversement (18), des moyens (70) d'introduction dans ledit tube d'un additif au mélange de caillé et de sérum.

8. Dispositif selon la revendication 7, caractérisé en ce que, pour ledit ou chaque tube de déversement (18), lesdits moyens (70) d'introduction comprennent une source dudit additif sous forme fluide raccordée audit tube de déversement.

9. Dispositif selon la revendication 8 ou 9, caractérisé en ce que, pour ledit ou chaque tube de déversement (18), lesdits moyens (70) d'introduction comprennent un distributeur (71) d'additif sous forme solide ou pâteuse comportant un logement (73) de réception d'un additif, ledit distributeur étant mobile par rapport audit tube de déversement (18) entre une position où le logement (73) est situé à l'extérieur du tube (18) pour introduire un additif dans le logement (73), et une position où le logement (73) est situé dans le tube (18) pour y libérer un additif (73).

10. Installation (1) de fabrication de fromages comprenant des moyens (2) de production d'un mélange de caillé et de sérum et un dispositif (5) de moulage dudit mélange dans des moules (6), le dispositif de moulage étant raccordé auxdits moyens de production du mélange, caractérisée en ce que le dispositif de moulage est un dispositif selon l'une quelconque des revendications 1 à 9.

11. Installation selon la revendication 10, caractérisée en ce que l'installation (1) comprend en outre, en aval du dispositif de moulage (5), un dispositif (8) d'ajustement de la quantité de caillé déversée dans chaque moule (6).

12. Installation selon la revendication 11, caractérisée en ce que le dispositif (8) d'ajustement de la quantité de caillé déversée comprend des moyens (56) de pesage d'au moins un moule (6), des moyens (51, 54, 58) de dépôt de caillé provenant dudit mélange de caillé et de sérum dans ledit moule (6), et des moyens (57) de commande des moyens (51, 54, 58) de dépôt en fonction de la masse dudit moule (6) déterminée par les moyens (56) de pesage.

13. Installation selon la revendication 12, caractérisée en ce que le dispositif (8) d'ajustement de la quantité de caillé déversée comprend une enceinte (50) de réception du mélange de caillé et de sérum raccordée aux moyens (2) de production dudit mélange, et en ce que les moyens de dépôt comprennent au moins un tube (51) de distribution de caillé raccordé à ladite enceinte.

14. Installation selon la revendication 13, caractérisé en ce que ledit ou chaque tube (51) de distribution de caillé est muni de passages d'évacuation du sérum, et les moyens de dépôt comprennent, pour ce tube de distribution (51), un organe de séparation de morceaux d'un bloc de caillé formé dans ledit tube de distribution (51).

15. Installation selon la revendication 13 ou 14, caractérisée en ce que le nombre et la disposition relative des moyens (51, 54, 58) de dépôt du dispositif (8) d'ajustement de la quantité de caillé déversée et du ou des tube(s) de déversement (18) du dispositif de moulage sont identiques.

16. Installation selon l'une quelconque des revendications 10 à 15, caractérisée en ce qu'elle comprend, entre le dispositif de moulage (5) et le dispositif (8) d'ajustement de la quantité de caillé déversée, une station (7) d'égouttage du mélange de caillé et de sérum déversé dans chaque moule.

17. Procédé de moulage d'un mélange de caillé et de sérum dans des moules (6) au moyen d'un dispositif de moulage (5) selon l'une quelconque des revendications 1 à 9, caractérisé en ce que, pour ledit ou chaque tube de déversement (18), on insère le tube de déversement (18) dans un moule (6), on descend le piston de dosage (20) dans le tube de déversement à proximité du fond (45) du moule, le ou les obturateur(s) (34) étant en position d'obturation du ou des passage(s) de déversement (31), on amène le ou les obturateur(s) (34) en position de libération du ou des passage(s) de déversement, on remonte le piston de dosage (20) en déversant ledit mélange directement dans le moule (6), on amène le ou les obturateur(s) en position d'obturation du ou des passage(s) de déversement (31), et on retire le tube de déversement (18) du moule ainsi rempli.

18. Procédé selon la revendication 17, caractérisé en ce que, le dispositif de moulage (5) comprenant, pour ledit ou chaque tube de déversement (18), des moyens (70) d'introduction dans ledit tube d'un additif audit mélange de caillé et de sérum, on déverse, une première quantité de mélange directement dans ledit moule (6) en remontant le piston de dosage (20), puis on introduit ledit additif dans le tube de déversement (18) sous le piston de dosage (20) avant de déverser une deuxième quantité de mélange directement dans ledit moule (6) en remontant le piston de dosage.

19. Procédé selon la revendication 18, caractérisé en ce que, pour ledit ou chaque tube de déversement (18), lesdits moyens (70) d'introduction d'un additif audit mélange comprenant un distributeur (71) d'additif sous forme solide ou pâteuse comportant un logement (73) de réception d'un additif, ledit distributeur (71) étant mobile par rapport au tube de déversement (18) entre une position où le logement (73), est situé à l'extérieur du tube de déversement (18) pour introduire un additif dans le logement (73) et une position où le logement est situé dans le tube pour y libérer un additif, on déverse une première quantité de mélange directement dans ledit moule (6) en remontant le piston de dosage (20), on amène le ou les obturateur(s) (34) en position d'obturation du ou des passage(s) de déversement (31) lorsque le piston de dosage (20) est à un niveau inférieur à celui du distributeur d'additif (71) en position de libération d'un additif, on remonte le piston de dosage (20) à un niveau supérieur à celui du distributeur d'additif en position de libération d'un additif, on amène le distributeur d'additif (71) en position de libération d'un additif, un additif (78) sous forme solide ou pâteuse ayant préalablement été introduit à l'intérieur du logement (73) du distributeur d'additif (71), on libère ledit additif dans le tube (18), on ramène le distributeur d'additif (71) vers sa position d'introduction d'un additif à l'intérieur de son logement (73), on descend le piston de dosage (20) dans le tube de déversement au voisinage d'une surface supérieure dudit additif (78) libéré dans le tube, on amène le ou les obturateur(s) (34) en position de libération du ou des passage(s) de déversement (31), et on remonte le piston (20) en déversant une deuxième quantité dudit mélange directement dans le moule (6).

20. Procédé de fabrication de fromages à partir d'une installation selon l'une quelconque des revendications 10 à 16, caractérisé en ce qu'on moule le mélange de caillé et de sérum dans des moules (6) suivant un procédé selon l'une quelconque des revendications 17 à 19.

21. Procédé selon la revendication 20, caractérisé en ce que, l'installation comprenant en outre, en aval du dispositif de moulage un dispositif (8) d'ajustement de la quantité de caillé déversée dans ledit ou chaque moule (6), le dispositif d'ajustement (8) comportant lui-même des moyens (56) de pesage d'au moins un moule (6), des moyens (51, 54, 58) de dépôt de caillé provenant dudit mélange dans ledit moule (6), et des moyens (57) de commande des moyens de dépôt, on commande pour chaque moule (6) les moyens (54, 55, 58) de dépôt en fonction de la masse dudit moule déterminée par les moyens (56) de pesage.

22. Procédé selon la revendication 21, caractérisé en ce que, pour chaque moule (6), on laisse le mélange déversé dans ledit moule (6) s'égoutter avant d'ajuster la quantité de caillé déversée dans ce moule (6).
